Europäisches Patentamt

European Patent Office

Office européen des brevets

(19)

(11) Publication number: 0 021 815

A1

## (12) EUROPEAN PATENT APPLICATION

(21) Application number: 80302099.9

(22) Date of filing: 20.06.80

(51) Int. Cl.³: B 65 D 59/00
F 16 L 57/00

(30) Priority: 22.06.79 GB 7921875

(43) Date of publication of application:
07.01.81 Bulletin 81/1

(84) Designated Contracting States:
AT BE CH DE FR IT LI LU NL SE

(71) Applicant: Quraishi, Abdul Hameed
69 Roundhill Road
Kettering Northamptonshire(GB)

(72) Inventor: Quraishi, Abdul Hameed
69 Roundhill Road
Kettering Northamptonshire(GB)

(74) Representative: Eder, Ephry
Lonsdale Chambers 27 Chancery Lane
London WC2A 1NF(GB)

(54) End protectors for tubular and/or rod-like elements.

(57) An end protector for the end of a tubular and/or rod-like element, the end protector comprising a hollow metal structure (8,12,17) pre-formed from a sheet of mesh or perforated metal of generally cylindrical, frustoconical or spiral configuration having transverse apertus through the wall thereof and being embedded in a mold-formed hollow structure of resilient material that extends through said transverse apertures. Where the element to be protected is threaded, the mold-formed hollow structure is formed with a mating thread, the thread of the mold being identical to that of the element. The mold-formed hollow structure is formed in the mold with two surfaces being axially spaced apart with said mold-formed threads between them, at least one of said surfaces being transverse and for sealing engagement of the radial end face of the element.

FIG.4

## "END PROTECTORS FOR TUBULAR AND/OR ROD-LIKE ELEMENTS"

This invention relates to protectors for the ends of tubular and/or rod-like elements, hereinafter referred to as "end protectors". This invention is considered particularly, but not exclusively, applicable to threaded end protectors for internally and/or externally screw-threaded pipe ends.

In the past, commercially available threaded end protectors for the screw-threaded ends of metal pipes have been constituted by a single homogeneous cap or plug member of solid material e.g. either steel or a plastics or rubber material, the member being provided with an appropriate special screw-thread for cooperation with the screw-threaded pipe end.

With a single homogeneous cap or plug member of solid resilient material such as a plastics or rubber material (e.g. as in USA Patent No. 2121436), there is a danger that the end edge of the metal pipe will cut through the resilient member when the latter is subjected to impact shock loads, e.g. from sharp objects such as stones on a rough ground during stacking operations or from inappropriate handling during shipping and storage. The insufficient puncture resistance of the resilient member can, with some plastics materials, cause the member to shatter when strongly impacted, whilst other plastics materials have a poor tear strength or cut growth resistance, i.e. poor resistance to tear once a cut has been made. Such members are consequently limited to relatively light duty use.

For relatively heavy duty use, such as in the oil or gas exploration and/or extraction industry (e.g. off-shore drilling and mining), a steel end protector is commonly used. Although this overcomes the above-mentioned drawbacks of plastics or rubber materials, each steel member must undergo a costly process of being carefully, precisely and individually machined with the requisite mating connecting means (e.g. an appropriate special screw-thread)which, to avoid galling (i.e. metal-to-metal welding or binding due to friction), must provide for a loose fit on the pipe end. Even though the space between the steel end protector and metal pipe may be packed with an anti-corrosion agent such as a grease, ingress of corrosive elements can still occur during prolonged outdoor storage of the end protected pipes. Furthermore, assembling threaded steel end protectors on to the screw-threaded ends of metal pipes requires considerable care and skill by the operatives to avoid over-tightening or cross-threading or an excessive interfacial stress at faces in metal-to-metal contact since any damage cannot be readily detected at the factory but only on the site or location of use when the threaded end protectors are removed. Rejects or damage at this stage can have expensive consequences quite out of proportion to the intrinsic replacement cost of the components involved (a delay of one day in fulfilling a contract on a North Sea oil rig can involve a loss of several thousand pounds

-3-

sterling). Moreover, there is a danger or likelihood that the threaded steel end protector will transmit to the metal pipe end at least a substantial proportion of the shock, compression and bending stresses to which it is subjected.

Another form of end protector which has been proposed comprises an open ring of rubber having a metal band within it, the two ends of the open ring being forced towards one another by clamping means. However, such an end protector leaves part of the metal pipe end open to corrosive elements through the gap between the ends of the open ring and also gives rise to problems in stacking the pipes provided with such incompletely encompassing end protectors.

Other proposals have been made for threaded end protectors for the screw-threaded ends of metal pipes, e.g. in USA Patents Nos. 2212423, 2253729, 3000402, 4020873 and 4020874, in which the end protector comprises two separate components of which one is resilient and is sandwiched between the pipe thread and the other component which is a tubular metal formation having a radially-directed flange-like portion overlying the pipe's end face. In general it is necessary for the two components to be separately produced and sequentially applied to the pipe end in two distinct assembly steps. So far as the applicant is aware, none of these proposed two-component threaded end protectors has been commercially manufactured or industrially adopted. It is thought that this is due:

(a)   to the likely manufacturing cost of producing two

-4-

separate components (of which said metal component must be provided with its particular special formation), and/or

(b)    to the likely labour cost of the two-step assembly sequence, and/or

(c)    to the likely difficulty of inserting a drift mandrel for testing the pipe prior to installation, and/or

(d)    to the likely difficulty of removing the end protector if the said metal component is damaged and deformed (e.g. in the vicinity of the radially-directed flange-like portion).

Another proposed form of end protector as conceived in French Patent No. 872393 comprises a supposedly resilient bitumen-based material cast integrally with a metal cap or plug having a radially-directed flange-like portion overlying and contacting the pipe's end face. So far as the applicant is aware, this too has never been commercially manufactured or industrially adopted, probably because of:

(a)    the anticipated high cost of forming the metal cap or plug with the radially-directed flange-like portion, and/or

(b)    the likely transmission of end impact forces directly from the flange-like portion to the pipe end with no dissipation by any resilient material, and/or

(c)    the possibility that the flange-like portion will deform (due to the end impact forces) such as to jam the threaded end protector fast onto the pipe end, and/or

(d)    the possibility that, if the threaded end protector is not screwed onto the pipe end sufficiently tightly (e.g. due to variations in the manufacturing tolerances), the gap left between the pipe's radial end face and the radially-directed flange-like portion of the end protector will provide a water trap leading to corrosion of the pipe end, and/or

(e)    the possibility that, if the threaded end protector is screwed onto the pipe end too tightly, the metal-to-metal contact between the pipe's radial end face and the radially-directed flange-like portion of the end protector will lead to galling and/or to galvanic corrosion, and/or

(f)    the lack of appropriate resiliency of the resilient bitumen-based material (bitumen being in fact a rather brittle material).

Many other forms of end protector have been proposed (e.g. in UK Patent No. 352540 dated 12 January 1931) which have apparently never been adopted commercially.

The above-mentioned disadvantages of previously proposed threaded end protectors are considered to have been overcome by a recent proposal for an end protector that (in accordance with UK Patent Application Nos. 521/77, 522/77 and 523/77) is a composite generally cylindrical structure comprising two members in mutual engagement surrounding one another, one of the members being relatively resilient and threaded for co-operation with the element's threaded end, and the other of the members being relatively rigid, the end protector being characterised in that the relatively resilient member is molded or cast (i.e. formed in a mold), from an elastomeric material, bondingly to the relatively rigid member to be integral therewith, in that the relatively rigid member is of uniform and constant cross-section from end-to-end thereof (i.e. it has no radially-directed flange-like portion), and in that the relatively resilient member is adapted to engage sealingly against the element at at least two axially spaced regions of which one is the radial end face of the element.

With each of the above-mentioned end protectors in which a resilient material is formed, i.e. molded or cast, in a mold to provide the resilient material with a screw-thread for co-operation with the threaded end of a tubular or a rod-like element, the mold thread may need to /be specially designed to allow for dimensional changes (e.g. shrinkage) of the resilient material during the latter's solidification and/or gellation or curing, e.g. by 0.02 length units per unit of length. In such a case it is necessary for special molds to be produced at considerable expense and it is not feasible merely to use a said threaded element as a mold surface or base. For example, where the end protector is for a threaded pipe end having 6

-7-

threads per inch (i.e. a pitch of 0.1667) and the resilient material has a contraction or shrinkage factor of 0.020 inch per inch, the mold must be formed with a special thread having a pitch of 0.1700 to ensure that the finished end protector will have a 6 threads per inch screw-thread. If no allowance for shrinkage is made, the resultant end protector would have 6.122 threads per inch instead of 6.

It is therefore desirable, to minimise production and design costs, to provide an end protector comprising a resilient material having a screw-thread and/or shape that has been formed in a mold, the mold having a thread and/or shape in substantially or virtually exact conformity with the thread and/or shape to be engaged and protected by the end protector.

According to a first aspect of this invention there is provided

An end protector for the end of a tubular and/or rod-like element, the end protector comprising a hollow metal structure of generally tubular (i.e. cylindrical, frusto-conical or spiral) configuration having transverse apertures through the wall thereof and being embedded in a resilient hollow structure that extends through said transverse apertures, said resilient hollow structure being formed by gravity casting or low-pressure injection-moulding into a mold of a thermosetting urethane elastomeric material produced by the chemical reaction between at least two substances upon the admixture thereof immediately prior to said gravity casting or low-pressure injection-moulding, at least one surface of the resilient hollow structure being mold-formed to mate with the surface of said element that is to be protected.

It will be appreciated that the cure time of the resilient hollow structure is determined by the relative proportions of said two substances. For example said cure time may be 1 to 60 seconds, preferably 1 to 10 seconds.

In one preferred arrangement, where said end of the element is provided with connecting means to adapt it for mating connection to another element, the said one surface formed by the mold is formed with mating connecting means for mating connection with said element's end. Conveniently said connecting means and said mating connecting means comprise respectively a screw thread and a mating screw thread. Alternatively or additionally said connecting means may include at least one annular groove or protuberance, and said mating connecting means may include the geometrically complementary and mating features to said annular groove or protuberance.

Where the end protector is for the externally provided connecting means of a tubular or rod-like element, the corresponding said mold-formed mating connecting means

is in the inner surface of the mold-formed hollow structure. Where the end protector is for the internally provided connecting means . of a tubular element, the corresponding said mold-formed mating connecting means is in the outer surface of the mold-formed hollow structure.

Preferably the hollow metal structure is in intimate contact at all points (i.e. including the aperture boundaries) with the mold-formed hollow structure. Conveniently the resilient material is bonded (by the molding or casting thereof in the mold and its inherent adhesive properties) to the hollow metal structure at all points of intimate contact between them.

The hollow metal structure may have a generally cylindrical configuration with its opposed ends in axial alignment with one another. Alternatively, the hollow metal structure may have a generally frusto-conical configuration with different radii of curvature for its opposed ends. In either case, there is preferably no sudden transition in cross-section, e.g. adjacent either end of the metal structure whereby a radially-directed flange is defined.

Preferably the hollow metal structure is formed by bending a sheet of mesh-like metal material through at least 360$^{\circ}$. Where such bending is through exactly 360$^{\circ}$, the adjoining sheet ends may be butt-joined together, e.g. as by welding, soldering, adhesive, or other suitable means. Where such bending is slightly in excess of 360$^{\circ}$, the adjoining sheet end portions may be lap-jointed together, e.g. as by welding, soldering, adhesive, or other suitable means. Where such bending is considerably in excess of 360$^{\circ}$, overlapping sheet portions may be spaced apart to define a spiral configuration, the space being occupied by the resilient material of the mold-formed structure which serves to hold said overlapping sheet portions in their spaced apart positions.

Preferably the mold-formed hollow structure has two surfaces, other than threads, for sealing engagement of the element, the two surfaces being axially spaced apart with the said mold-formed thread between them, one of said surfaces being transverse and for sealing engagement of the radial end face of the element.

The resilient material may be an

epoxy-derived urethane copolymer.

Preferably the hollow structure of resilient material is formed in a mold having a screw thread and/or shape corresponding substantially or virtually exactly to the thread and/or shape of the element end which the end protector is intended to protect. Conveniently the threaded and/or shaped part of the mold is provided by the element end itself.

According to . . another aspect of this invention there is provided a tubular or a rod-like element having an end protected by an end protector according to said first aspect of this invention. Preferably the end protector is formed by a molding or casting operation directly onto the end of said element.

By way of example, embodiments of this invention will now be described with reference to the accompanying schematic drawings of which:

Figure 1 is a longitudinal axial section through an assembly comprising a pipe coupling and a hollow pipe of annular cross-section for use in an oil well;

Figure 2 is a schematic axial section through a first "pin end" end protector according to this invention and half of a mold for forming it;

Figure 3 is a schematic axial section through a second "pin end" end protector according to this invention and half of a mold for forming it;

Figure 4 is a schematic axial section through a "box end" end protector according to this invention and half of a mold for forming it;

Figure 5 is a schematic illustration of part of a first hollow metal structure for end protectors according to this invention, e.g. as incorporated in the end protector illustrated in Fig 2;

Figure 6 is a schematic illustration of part of a second hollow metal structure for end protectors according to this invention, e.g. as incorporated in the end protector illustrated in Fig 3;

Figure 7 is a schematic illustration of part of a third hollow metal structure for end protectors according to this invention, e.g. as incorporated in the end protector illustrated in Fig 3;

Figure 8 is a schematic illustration of part of a fourth hollow metal structure for end protectors according to this invention, e.g. as incorporated in the end protector illustrated in Fig 4;

Figure 9 is a schematic cross-section (not to scale) on the line lX - lX of Fig 2 when the end protector illustrated therein is modified as described below; and

Figure 10 is a scrap sectional view of a modified "box end" end protector on the box end of a pipe assembly.

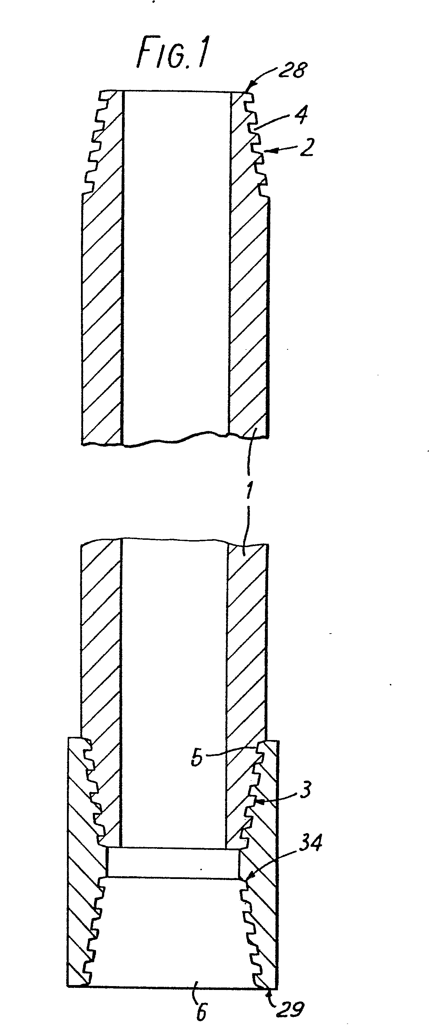

The assembly illustrated in Fig. 1 comprises a hollow tubular steel oil-well pipe 1 of annular cross-section provided at each end 2,3 with a taper, the taper angle being exaggerated in the drawings for clarity of illustration. Each tapered pipe end 2, 3 is provided with an external screw-thread 4, 5 respectively. An internally threaded coupling 6 is screwed on to the tapered pipe end 3 to provide a sealed connection therewith and for the connection of like assemblies in series. The assembly of Fig 1 thus has a so-called "pin end" provided by pipe end 2, and has a so-called "box end" provided by the matingly tapered and threaded coupling 6. Before the assembly can be despatched to a desired site (e.g. for storage or actual installation in an oil well) thread protectors for both the pin end and the box end must be fitted, e.g. in accordance

-14-

with API Specification 5A, section 9.

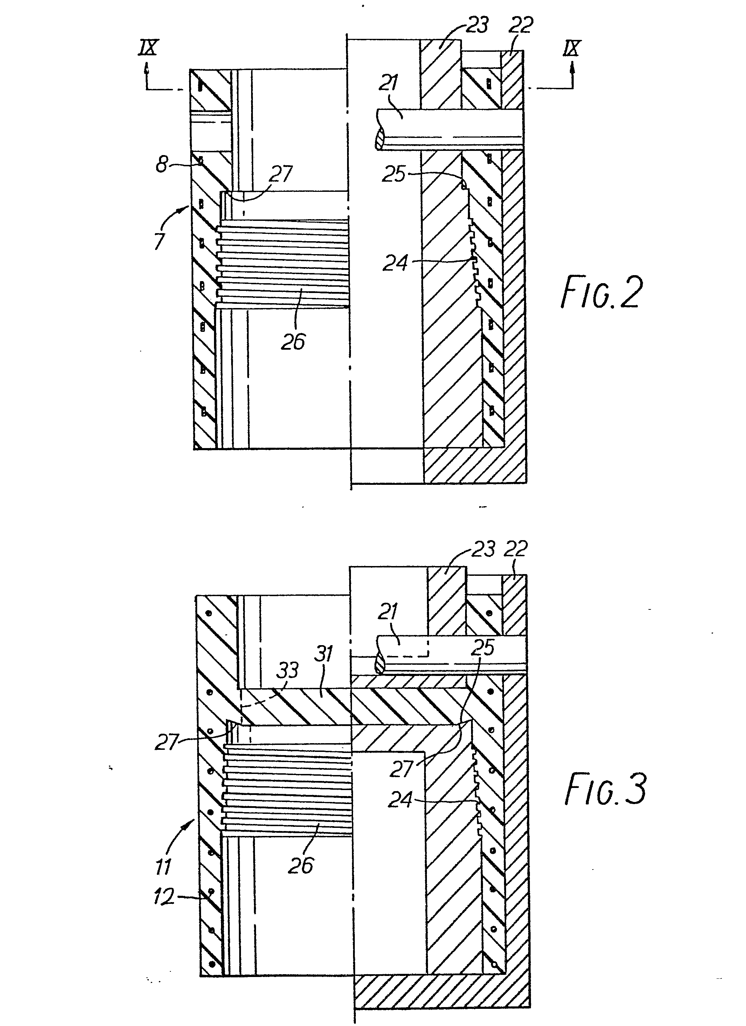

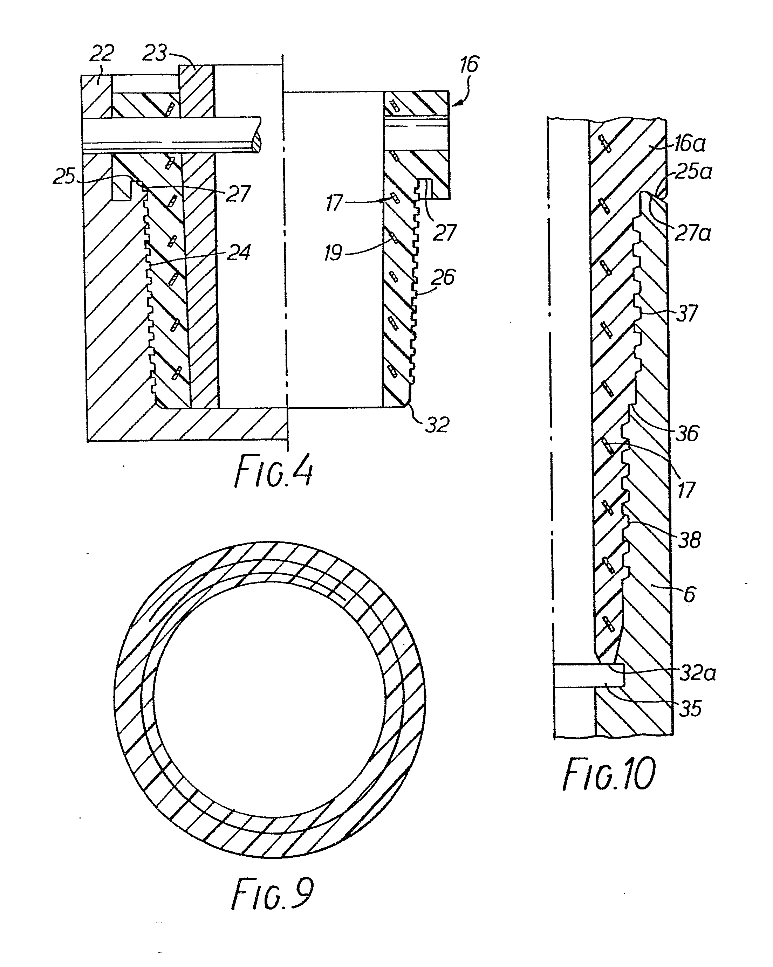

Figures 2 and 3 illustrate two forms of pin end protector according to this invention, and Figure 4 illustrates a form of box end protector according to this invention. In each case the end protector is a composite body comprising a hollow metal structure embedded in a hollow structure of resilient material formed by pouring (i.e. gravity casting) or by low-pressure injection-molding of the resilient material in a mold containing the hollow metal structure. The metal structure is of generally cylindrical, frusto-conical or spiral configuration with its wall provided with transverse apertures, in a regular or irregular formation. Preferably, the number and shape of the transverse apertures is such that the wall has a greater area of voids than of solid metal. Conveniently, the metal structure is formed from a sheet of metal mesh, the sheet being bent through at least 360° to provide the metal structure with its generally cylindrical, frusto-conical or spiral configuration.

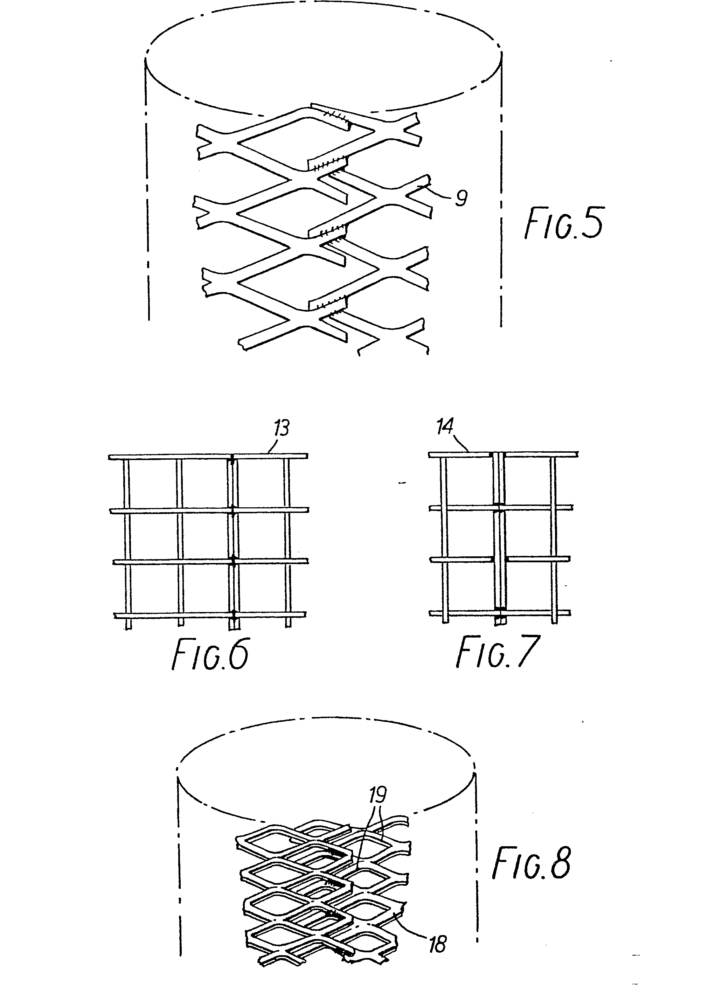

The pin end protector 7 of Fig. 2 is illustrated as having its hollow metal structure 8 pre-formed from a sheet of mesh such as that illustrated in Fig 5 and referenced 9. Preferably with this type of mesh, the ends of the bent sheet overlap one another slightly and are lap-welded together to provide a generally cylindrical configuration for the metal structure.

The pin end protector 11 of Fig 3 is illustrated as having its hollow metal structure 12 pre-formed from a sheet of mesh such as that illustrated in Fig 6 and referenced 13 or such as that illustrated in Fig 7 and referenced 14. Mesh 13 is composed of horizontal and vertical strands of 16 or 18 S.W.G galvanised steel wire, the strands overlying one another to form ½ inch square voids and being soldered or welded together at their cross-over points. Mesh 14 is formed of similar wire but the horizontal and vertical strands are interwoven so that bonding at the cross-over points is not necessary. Preferably, with either mesh 13 or mesh 14, the ends of the bent sheet are butt-welded together to provide a generally cylindrical configuration for the metal structure.

The box end protector 16 of Fig. 4 is illustrated as having its hollow metal structure 17 pre-formed from a sheet of expanded metal mesh such as that illustrated in Fig 8 and referenced 18. Mesh 18 is formed from a pierced and expanded planar sheet (in a similar fashion to mesh 9 of Fig 5) but has the bounding edges 19 of its transverse apertures twisted or inclined to the cylinder axis instead of being normal thereto (as is the case with mesh 9 of Fig 5). The mesh sheet 18 is bent through slightly more than $360^\circ$ to form a generally cylindrical configuration for the metal structure, the overlapping sheet ends being lap-welded together.

It will be appreciated that each of the illustrated hollow metal structures 8, 12 and 17 can be formed from an appropriate different sheet of mesh to that illustrated (e.g. from a mesh such as that illustrated in Fig. 6, 7 or 8 instead of mesh 9 for hollow metal structure 8, from a mesh such as that illustrated in Fig 5 or 8 instead of mesh 13 or 14 for hollow metal structure 12, or from a mesh such as that illustrated in Fig 5, 6 or 7 instead of mesh 18 for hollow metal structure 17), and that the mesh ends may be butt-joined together or alternatively lap-joined together by any suitable means (e.g. welding, soldering or adhesive). Furthermore it will be appreciated that the axially spaced opposite ends of the hollow metal structure 8, 12 and/or 17 need not be in axial alignment with one another as illustrated, but may have different radii of curvature to provide the hollow metal structure with a generally frusto-conical configuration. Moreover it will be appreciated that the sheet of mesh may be bent through considerably more than 360$^{o}$ to the form of a spiral, the overlapping wall portions being held apart by intervening resilient material of the mold-formed hollow structure (as schematically illustrated in Fig. 9). Also, where a mesh such as that illustrated in Fig. 5 or Fig 8 is used for the hollow metal structure, it will be appreciated that the upper and/or lower raw end(s) may be protected and/or reinforced by a smooth-edged strip or band of metal adhered thereto (e.g. as by welding) to provide the hollow metal structure with a smooth end edge at said upper and/or lower end(s). Furthermore, one or more such strips or bands may be bonded (e.g. as by welding) to the wall of the hollow metal structure to be directed longitudinally of the latter to provide additional reinforcement and stiffening thereof.

Although the above-described and illustrated exemplary embodiments of this invention have the hollow metal structures (8, 12 and 17 in Figs 2, 3 and 4) pre-formed from sheet metal mesh, it will be appreciated that the use of such mesh is not essential but that other materials may be used to form the hollow metal structure having transverse apertures through its wall. An example of an alternative material to mesh is perforated metal sheet or strip.

To form the composite end protector (7, 11 and 16 in Figs. 2, 3 and 4), the hollow metal structure is suspended in a hollow mold of annular cross-section with the metal structure's longitudinal axis co-axial with that of the mold. The metal structure is suspended by a cross-pin 21 extending diametrically therethrough adjacent one end and projecting through the two co-axial mold walls 22, 23 the latter being radially spaced from the adjacent surfaces of the metal structure. For the pin end protectors 7, 11 of Figs 2 and 3, the outer mold wall 22 has a smooth internal surface that is either cylindrical or frusto-conically tapered (according to requirements), whereas inner mold wall 23 has a generally parallel cylindrical or tapered surface that is provided with a threaded portion 24 and a stepped portion 25. For the box end protector 16 of Fig. 4, it is the inner mold wall 23 which has a smooth outer surface (that is either cylindrical or frusto-conically tapered according to requirements) and a generally parallel

-18-

inner surface of the outer mold wall 22 that is provided with the threaded portion 24 and with a stepped portion 25 in the form of an upstanding annular rib.

The resilient material formed in the mold may be a natural rubber or a synthetic rubber, e.g. a nitrile rubber or a styrene butadiene rubber, or may be a resilient plastics material. The material may be a thermoplastic or thermosetting organic polymer or copolymer, e.g. an ethylene, propylene, polystyrene or isopropylene compound or a polyester, urethane or epoxy compound. Two particularly preferred and especially suitable resilient materials are the thermosetting elastomeric urethane polymer materials available from Wright & Sumner Limited (of 55 Argyll Street, Kettering, Northants, England) under the names CUE 02036 (cellular or non-cellular) and CUE 02038, the latter being an epoxy-derived urethane rubber copolymer. Such thermosetting materials are formed by a chemical reaction between two or more substances upon admixture thereof, the substances being simultaneously or immediately thereafter (i.e. cast under gravity) poured or injected under low pressure into the mold (which may be stationary or subjected to angular movement about one or more axes, e.g. in the manner described and claimed in UK Patent No. 1,434,345) to provide a rapidly gelling (having a cure time of 1 to 60 seconds, preferably 1 to 10 and solidifying hollow resilient structure seconds) which: (a) conforms to the mold and forms a mating thread portion 26 and stepped (or recessed) portion 27; (b) totally encompasses the hollow metal structure, i.e. covers not only its ends and inner and outer surfaces but also extends

-19-

through the transverse apertures of the hollow metal structure; and (c) is in contact with and/or bonded to the hollow metal structure at all points of the latter's surface area by the natural (i.e. inherent) /adhesive properties of the material itself, without a separate adhesive and without specially deforming the metal member to provide bond-assisting and/or keying protuberances.

This last feature is provided or enhanced by the tension produced within the resilient material due to its contraction or shrinking as the material gels, cures or solidifies with an increase in viscosity. However contrary to expectations and quite surprisingly it has been found from tests and experiments that such contraction or shrinkage is considerably less than (generally about one-tenth) that of a comparably dimensioned end protector formed solely of the resilient material or formed of the resilient material bonded to a continuous non-apertured steel sleeve (as in UK Patent Application Nos. 521/77, 522/77 & 523/77). Accordingly, and in contrast with the prior art referred to above, it is not necessary for the threaded mold wall to be specially formed, taking the anticipated contraction or shrinkage into account (which would vary with the resilient material to be molded), but one can form the threaded mold wall with precisely the same threads as are formed on the pipe assembly, or alternatively use the end of such a pipe assembly itself (e.g. from a scrap pipe assembly) to provide the threaded mold wall. With the surprisingly low level of shrinkage or contraction of the resilient material in end protectors produced in accord with the above-described embodiments of this invention, it has been found that, despite the small difference in thread pitch between the assembly and the protector, it is possible to screw the end protector on to the pipe assembly very easily and with no danger of cross-threading occurring which could damage the threads of the end protector and either damage or lead to corrosion of the assembly's threads.

It is difficult to explain precisely why the resilient material of the illustrated end protectors undergoes such a drastic reduction in the degree of contraction or shrinkage during molding or casting, but it is thought that this must be due to the presence of the transversely apertured hollow metal structure 8, 12 or 17, and the fact that any polymerisation stress in the resilient material inwardly of the hollow metal structure is counter-balanced by the polymerisation stress in the resilient material outwardly of the hollow metal structure.

It will be appreciated that the hollow metal structure 8, 12 and 17 in Figs 2, 3 and 4 provides what may be termed a reinforcement to the mold-formed structure of resilient material. However, the presence of the transverse apertures in the wall of the metal structure might be thought to weaken the reinforcement capability of the metal structure and that a continuous non-apertured steel sleeve or lining (as in UK Patent Application Nos. 521/77, 522/77 & 523/77) might be stronger. However, quite surprisingly, it has been found that the mesh-formed reinforcement - particularly with a twisted mesh such as that of Fig 8 - provides a stronger reinforcement than a continuous non-apertured sleeve or lining of comparable dimensions and weight. It is believed that this may be due to the work hardening of the metal when this is formed into the mesh, such work-hardening being particularly high with a mesh such as that of Fig 8. Furthermore, since the structure 8, 12 and 17 is totally enclosed and encompassed by the mold-formed structure of resilient material, there is no possibility for the metal structure to rust or corrode. Moreover, since the resilient material extends through the metal structure's transverse apertures, a locking effect is produced between the metal structure and the resilient material to each side of it, and this locking effect - which is particularly enhanced with a mesh such as that of Fig 8 and having inclined or twisted aperture edges 19 - tends to prevent de-lamination or separation of the metal structure from the resilient material to each side of it. The adherence of the resilient material to the metal has been found to be enhanced where the surface of the latter is galvanised although since the metal structure is totally enclosed by the resilient material, such galvanising is not essential for the more usual function of preventing rust or corrosion.

A typical end protector for a $5\frac{1}{2}$ inch oil-well pipe assembly was produced according to this invention and having its metal structure formed from $\frac{1}{2}$ inch square mesh of 16 S.W.G. galvanised steel wire as shown in Fig 6, the resilient material being an epoxy-derived urethane copolymer cast in a mold of 3/16 inch spacing between its walls at their nearest approach. This end protector was tested and found to afford excellent shock protection to the threaded pipe end under all impact loads that could be reasonably expected in use. This surprisingly high degree of shock protection is considered to have been due to the transversely apertured hollow metal structure being able to dissipate in its own plane the resultant shear forces induced by the impact shock loads and transmitted thereto via the interface of metal and resilient material. Despite the high impact shock loads applied, the end protector maintained its integrity and remained undamaged, this being thought due to the unexpectedly high tear strength imparted to the resilient material by the transversely apertured hollow metal structure.

It will be appreciated that the stepped or recessed portion 27 formed during molding or casting of the resilient portion provides a surface for sealing engagement of the radial end face 28 or 29 of the pipe end to be protected (see Fig 1). This transverse sealing surface portion 27 may be normal to the axis of the end protector as in Figs 2 and 4, or may be inclined thereto as in Fig 3 (e.g. so as to provide a re-entrant angle). Furthermore, as shown in Fig 3, the portion 27 may extend as a disc 31 completely across the end protector to provide it with a somewhat H-shaped longitudinal cross-section, the disc 31 serving as a closure for the pipe end preventing ingress of unwanted foreign matter. Although each of the pin end protectors of Figs 2 and 3 is shown with its threaded portion 26 extending only partially from adjacent portion 27 to a point remote from the opposite end of the protector, the threaded portion 26 may alternatively, in each case, extend up to adjacent said opposite end, i.e. the end protector's threads may cover and mate with only a portion of the whole threaded area of the pipe end to be protected (the arrangement shown in Figs 2 and 3) or may cover and mate with the whole threaded area of the pipe end to be protected (the arrangement shown in Fig 4). Similarly, although the box end protector of Fig 4 is shown with its threaded portion 26 extending from adjacent portion 27 to adjacent the opposite end of the protector, the threaded portion 26 may alternatively only extend up to a point remote from said opposite end. Furthermore it will be appreciated that the said opposite end (of the end protector of Fig 2, 3 or 4) may be molded to a dimension slightly smaller (Fig 2 or 3) or larger (Fig 4) than the corresponding portion of the pipe assembly thereby to provide a resilient cylindrical surface for radial sealing engagement of the pipe assembly. With the box end protector of Fig 4, such sealing by said opposite end may be effected alternatively or additionally by a mold-formed transverse surface 32 to engage sealingly against a surface 34 of the pipe assembly.

It will also be appreciated that the thread forms and sealing surfaces can be readily molded to accord with requisite specifications for the pipe assembly, e.g. API, VAM, Hydril, BDS or the like. Due to the two radial seals or the one radial and one cylindrical seal, corrosion producing agents cannot gain access to the thread. The latter is also physically isolated from the exterior and protected against damage due to direct impact and/or abrasion by an outside agency. The diametrically aligned two holes in the end protector left by removing the cross-pin 21 are disposed beyond the end of the pipe assembly and serve as an eyelet for the insertion of a tommy-bar or like tool that may assist screwing the end protector on to or off the pipe assembly.

It will be noted that the end protectors of Figs 2 and 4 are open at their axial ends. The end protector of Fig 3 can be rendered operable by removing the disc portion 31, the latter being moulded so as to frangible along the line 33. With an open-ended end protector (which nevertheless has the stepped portion 27 at the pin end), the diameter of the opening can be arranged to provide the diametric clearance necessary to enable the ends protected pipe assembly to pass over a pipe-straightness testing-mandrel according to the relevant API Specification for oil well use and without requiring that the end protectors be first unscrewed and removed from the pipe assembly. Thus the end protectors can be unscrewed and removed after the ends protected pipe assembly has been mounted on the mandrel and immediately before the pipe assembly is fed down the oil well.

However, the present invention also contemplates the provision of end protectors with closed ends, e.g. of H-section as that illustrated in Fig 3 or of U-section. When fitted with such closed end protectors, the pipe assembly's inner surface is also sealed off against ingress of corrosive elements whereby it may be stored oudoors for long periods of time without internal degradation. Furthermore the disc-like closure wall (31 in Fig 3) may serve as a flexible diaphragm to accommodate pressure changes in the air trapped within the sealed pipe assembly as the temperature varies.

To minimise damage during handling and storage, particularly with inadequate or no dunnage, the box end protector may be formed such that its maximum outer diameter is no greater than that of the pipe assembly. Thus, as shown in Fig. 10, the box end protector 16a, with its hollow metal structure 17, has its externally projecting portion of the same diameter as the outer diameter of the assembly's box end 6, the stepped portion 27a replacing the recessed portion 27 of Fig. 4 but similarly providing for sealing engagement of the transverse end face 25a of the box end. The opposite transverse end 32a of the box end protector 16a is engageable against a ring seal 35 disposed in an annular recess of the assembly's box end to ensure sealing of the box end at both ends thereof. Furthermore, it will be noted that the box end protector 16a also provides an intermediate transverse seal at 36 between the two separate threaded portions 37 and 38, these portions being relatively stepped in diameter and their respective threads being parallel (rather than tapered as in Figs 1-4), i.e. a standard "Hydril" coupling.

Also, to minimise damage during handling and storage, particularly with inadequate or no dunnage, the pin end protector may be externally chamfered, bevelled or tapered at one or both ends so as to permit longitudinal sliding of one pipe assembly over another with little or no risk of damaging impact against the protector's transverse end faces.

The hollow metal structure may be of steel (preferably mild steel), bronze, copper, brass, aluminium, or like metals and/or of metal alloys. The resilient material may comprise a homogeneous solid and/or a cellular construction, which may be foamed (with or without a surfacial skin, e.g. a self-formed skin) or a syntactic structure including pre-formed hollow spheres or an inner foam.

It will be noted that each of the above-described end protectors according to this invention is of generally cylindrical form whereby when a pin end protector it encompasses all round the exterior surface of the pin end of a pipe assembly and when a box end protector it encompasses all round the interior surface of the box end of a pipe assembly (i.e. is encompassed all round by the box end of the pipe assembly). Although the resilient member of respectively the pin end and box end protectors extends axially over at least the majority of the pipe

assembly's threads, the resilient member's threads need not extend over the entire length of the resilient member itself. This facilitates screwing on and off the protector, especially where the pipe assembly threads gradually run out, i.e. decrease in depth along the taper.

It will be appreciated that end protectors according to this invention may be unthreaded and/or untapered and smoothly cylindrical at their faces adapted and/or intended to contact the tubular element. Thus, for example, the pipe assembly may include a shaped, unthreaded coupling arrangement such as the "Talon" joint manufactured by Hunting Oilfield Services, or some other special shape. It will also be appreciated that this invention is not restricted to end protectors for the ends of pipe assemblies as illustrated in Fig. 1, but that end protectors for other tubular elements can be formed in accordance with this invention. Such tubular elements may be provided on or constituted by distillation columns, boilers, heat exchangers, riser pipes, pipe lines (e.g. welding pipes), drill bits, oil-well production strings (e.g. using Talon joints), casings and drill pipes, and couplings. End protectors according to this invention can be arranged to protect the ends of such tubular elements against damage during manufacturing, stacking, storage, loading and/or unloading, shipment, transportation and installation operations. There is no metal-to-metal contact between the above-described and illustrated end protectors and the tubular element so that galling and

0021815

over-tightening of threads and sealing faces cannot occur, there is no danger of a burr accidentally spoiling the pipe thread, inter-metallic galvanic corrosion cannot arise, the end protectors can be removed and refitted by screwing on or off without damaging the thread, and cross-threading damage cannot occur.

CLAIMS

1. An end protector for the end of a tubular and/or rod-like element, the end protector comprising a hollow metal structure of generally tubular (i.e. cylindrical, frusto-conical or spiral) configuration having transverse apertures through the wall thereof and being embedded in a resilient hollow structure that extends through said transverse apertures, said resilient hollow structure being formed by gravity casting or low-pressure injection-moulding into a mold of a thermosetting urethane elastomeric material produced by the chemical reaction between at least two substances upon the admixture thereof immediately prior to said gravity casting or low-pressure injection-moulding, at least one surface of the resilient hollow structure being mold-formed to mate with the surface of said element that is to be protected.

2. An end protector according to Claim 1 and for the end of a tubular or of a rod-like element provided with connecting means to adapt it for mating connection to another element, wherein the said one surface formed by the mold is formed with mating connecting means for mating cooperation with said element's end.

3. An end protector according to Claim 2, wherein said connecting means and said mating connecting means comprise respectively a screw thread and a mating screw thread.

4. An end protector according to any preceding Claim wherein the hollow metal structure is in intimate contact at all points of its surface with the mold-formed hollow structure.

5.    An end protector according to any preceding Claim, wherein the mold-formed hollow structure is bonded (by the molding or casting of its resilient material) to the hollow metal structure at all points of intimate contact between them.

6.    An end protector according to any preceding Claim, wherein the hollow metal structure is formed by bending a sheet of mesh-like metal material through at least $360^{\circ}$.

7.    An end protector according to Claim 6, wherein the hollow metal structure has a generally cylindrical or a generally frusto-conical configuration and the ends of the sheet are butt-joined together or lap-joined together.

8.    An end protector according to Claim 6, wherein said bending is substantially in excess of $360^{\circ}$ and wherein overlapping portions of the sheet are spaced apart, to define a spiral configuration for the hollow metal structure, and are interconnected by the resilient material of said mold-formed structure.

9.    An end protector according to Claim 3 or to any one of Claims 4 to 8 when dependant therefrom, wherein the mold-formed hollow structure has two surfaces, other than threads, for sealing engagement of the element, the two surfaces being axially spaced apart with the said mold-formed thread between them, one of said surfaces being transverse and for sealing engagement of the radial end face of the element.

10.    An end protector according to Claim 3 or to any one of Claims 4 to 9 when dependant therefrom, said end protector being formed in a mold cavity having a screw thread corresponding substantially or virtually exactly to the thread of the element end to be protected by the end protector.

11. An end protector according to Claim 10, wherein the threaded part of the mold is provided by the element end itself.

12. An end protector for a tubular or rod-like element, the end protector being substantially as herein described with reference to and/or as illustrated in the accompanying drawings.

13. A tubular or rod-like element having an end protected by an end protector according to any preceding Claim.

14. An element and end protector according to Claim 13, the end protector having been formed by a molding or casting operation directly onto the end of said element.

CLAIMS 12, 13 AND 14 CANCELLED

## FIG.1

*Fig.2*

*Fig.3*

**FIG.4**

**FIG.9**

**FIG.10**

*FIG.5*

9

13

*FIG.6*

14

*FIG.7*

19

*FIG.8*

18

| Category | DOCUMENTS CONSIDERED TO BE RELEVANT | | CLASSIFICATION OF THE APPLICATION (Int Cl. ³) |
|---|---|---|---|
| | Citation of document with indication, where appropriate, of relevant passages | Relevant to claim | |
| | DE - C - 740 215 (DEUTSCHE RÖHREN-WERKE AG) | 1,2,4, 5,7,8 | B 65 D 59/00 |
| | + Totality + | | F 16 L 57/00 |
| | -- | | |
| | FR - A1 - 2 376 996 (QURAISHI ABDUL HAMEED) | 1,2,3, 7,10 | |
| | + Totality + | | |
| | -- | | |
| | FR - A1 - 2 288 920 (DUKESS JOSEPH) | 1,2,3, 7 | |
| | + Totality + | | |
| | -- | | TECHNICAL FIELDS SEARCHED (Int.Cl. ³) |
| | US - A - 4 157 100 (JOHN TURK) | 1,2,3, 7 | B 65 D 59/00 |
| | + Totality + | | F 16 L 9/00 |
| | -- | | F 16 L 15/00 |
| A | DE - B2 - 2 354 731 (PRODUITS CHIMIQUES) | 1,4,5, 6,7,8 | F 16 L 21/00 |
| | + Totality + | | F 16 L 47/00 |
| | -- | | F 16 L 55/00 |
| A | US - A - 3 289 704 (J.A. NICOSIA) | 1,4,5, 6,7,8 | F 16 L 57/00 |
| | + Totality + | | |
| | -- | | |
| A | DE - A1 - 2 617 006 (HOBAS ENGINEERING) | 1,4,5, 7,8 | |
| | + Totality + | | CATEGORY OF CITED DOCUMENTS |
| | -- | | X: particularly relevant |
| D | US - A - 2 121 436 (L.H. LYTLE) | 1 | A: technological background |
| | + Totality + | | O: non-written disclosure |
| | -- | | P: intermediate document |
| D | US - A - 2 212 423 (L.H. LYTLE) | 1 | T: theory or principle underlying the invention |
| | - Totality + | | E: conflicting application |
| | -- | | D: document cited in the application |
| | | | L: citation for other reasons |
| | | | & member of the same patent family. corresponding document |

| Place of search VIENNA | Date of completion of the search 08-08-1980 | Examiner SCHUGANICH |
|---|---|---|

EPO Form 1503.1  06.78

| | DOCUMENTS CONSIDERED TO BE RELEVANT | | CLASSIFICATION OF THE APPLICATION (Int. Cl.) 3 |
|---|---|---|---|
| Category | Citation of document with indication, where appropriate, of relevant passages | Relevant to claim | |
| D | US - A - 2 253 729 (H. W. SCHUETZ)<br>+ Totality +<br>--- | 1 | |
| D | US - A - 3 000 402 (P. PETROLEUM COMPANY)<br>+ Totality +<br>--- | 1 | |
| D | US - A - 4 020 873 (PRECISE METALS)<br>+ Totality +<br>--- | 1 | TECHNICAL FIELDS SEARCHED (Int. Cl.) 3 |
| D | US - A - 4 020 874 (PRECISE METALS)<br>+ Totality +<br>---- | 1 | |

EPO Form 1503.2  06.78